# EUROPÄISCHE PATENTSCHRIFT

(11) **EP 3 781 467 B1**
(45) Veröffentlichungstag und Bekanntmachung des Hinweises auf die Patenterteilung: **28.06.2023**
(21) Anmeldenummer: 19705323.4
(22) Anmeldetag: 12.02.2019
(51) Int. Cl.: B62J 9/12, B62J 9/14, B62J 9/23, B62J 9/26, B62J 9/27, B62J 1/12, B62J 1/14, B62J 1/28, B62J 7/04, B62J 17/00

(54) **GEPÄCKAUFNAHMEVORRICHTUNG FÜR EIN MOTORRAD**
LUGGAGE-RECEIVING DEVICE FOR A MOTORCYCLE
DISPOSITIF DE RÉCEPTION DE BAGAGES POUR MOTOCYCLETTE

(30) Priorität: 17.04.2018 DE 102018205836
(43) Veröffentlichungstag der Anmeldung: 24.02.2021
(73) Patentinhaber: Bayerische Motoren Werke Aktiengesellschaft, 80809 München (DE)
(72) Erfinder: HOMOET, Bernd-Josef, 85757 Karlsfeld (DE); LEUCHTE, Patrick, 80333 Maxvorstadt München (DE); VETTER, Ingrid, 84034 Landshut (DE); FUCHS, Sebastian, 80997 München (DE); KREMER, Bernhard, 85570 Markt Schwaben (DE)
(86) Internationale Anmeldenummer: PCT/EP2019/053377
(87) Internationale Veröffentlichungsnummer: WO 2019/201491

(56) Entgegenhaltungen:
- EP-A2- 1 431 167
- DE-A1-102011 078 268
- JP-A- H0 274 480
- JP-A- 2007 153 265

## Beschreibung

Die Erfindung betrifft eine Gepäckaufnahmevorrichtung für ein Motorrad oder ein motorradähnliches Kraftfahrzeug, gemäß dem Oberbegriff des Patentanspruchs 1.

Motorräder weisen in der Regel sehr begrenzten Stauraum für Gepäck auf. Daher sind verschiedene Gepäckbehältnisse bekannt, welche am Fahrzeug befestigt werden können, um zusätzlichen Stauraum bereitzustellen. Hierzu zählen beispielsweise Top-Cases oder seitliche Taschen beziehungsweise Koffer.

Im leeren Zustand werden diese entweder mitgeführt oder müssen vom Fahrzeug abgenommen werden. Entsprechend muss der Transport von Gegenständen bereits vor Fahrtantritt sorgfältig geplant werden. Ergibt sich erst bei einer Fahrt spontan und ungeplant Bedarf für zusätzlichen Stauraum, sind diese Gepäckbehältnisse möglicherweise nicht verfügbar. Gleiches gilt für derartige Fahrzeuge, die aus anderen Gründen, wie beispielsweise einem Fahrzeugdesign nicht über entsprechende Befestigungsmöglichkeiten für die genannten Behältnisse verfügen.

Insbesondere bei kleinen oder mittelgroßen Gegenständen, wie Einkäufen oder mitzuführender Bekleidung, werden daher häufig Rucksäcke eingesetzt, die einen Fahrkomfort jedoch deutlich einschränken.

Aus dem Stand der Technik sind Gepäckaufnahmevorrichtungen bekannt, beispielsweise aus der JP 2007 153265 A und der DE 10 2011 078268 A1. Eine weitere Gepäckaufnahmevorrichtung ist in der JP H02 74480 A beschrieben und zeigt einen faltbares Staufach, welches unter einem klappbaren Soziussitz angeordnet ist. Die EP 1 431 167 A2 offenbart eine Gepäckaufnahmevorrichtung gemäß dem Oberbegriff des Patentanspruchs 1.

Es ist daher eine Aufgabe der Erfindung eine verbesserte Verstaumöglichkeit für Gepäck an einem Motorrad oder dergleichen vorzusehen. Insbesondere soll eine Verstaumöglichkeit für kleine und mittelgroße Gegenstände bereitgestellt werden, welche bei spontanem Bedarf verfügbar ist und ansonsten einen Fahrer nicht einschränkt.

Diese Aufgabe wird gelöst mit einer Gepäckaufnahmevorrichtung mit den Merkmalen des Patentanspruchs 1.

Demnach wird eine Gepäckaufnahmevorrichtung für ein Motorrad oder ein motorradähnliches Kraftfahrzeug, bereitgestellt, mit zumindest
- einer fahrzeugfesten Fahrzeugstruktur,
- einem klappbar mit der Fahrzeugstruktur verbundenen Deckelelement, welches zumindest zwischen einem geschlossenen Zustand und einem geöffneten Zustand klappbar ausgebildet ist, und
- einem flexiblen Gepäckbehälter.

Außerdem ist der flexible Gepäckbehälter zumindest in dem geöffneten Zustand des Deckelelements derart mit dem Deckelelement und der Fahrzeugstruktur verbunden, dass im Inneren des Gepäckbehälters ein Aufnahmevolumen zur Aufnahme von Gepäckstücken in dem Gepäckbehälter bereitgestellt ist.

Zusätzlich ist der Gepäckbehälter lösbar mit einer Unterseite des Deckelelements mittels einer ersten Verbindungsvorrichtung verbunden oder verbindbar, wobei die erste Verbindungsvorrichtung ein Zwischenelement umfasst, welches einerseits mit dem Deckelelement verbunden ist und andererseits mit dem Gepäckbehälter lösbar verbunden oder lösbar verbindbar ist. Außerdem ist der Gepäckbehälter als separater Gepäckbehälter ausgebildet, wobei die lösbar ausgebildete erste Verbindungsvorrichtung ein Befestigen des separaten Gepäckbehälters oder ein Entfernen des Gepäckbehälters ermöglicht, so dass der Gepäckbehälter zum Be- oder Entladen von dem Fahrzeug entfernt werden kann.

Außerdem ist das Zwischenelement schlauchförmig ausgebildet und an einem ersten Ende umlaufend mit einem oberen freien Rand des Gepäckbehälters verbunden, wobei ein zu dem ersten Ende entgegengesetzt angeordnetes zweites Ende mit seinem Rand umlaufend mit der Unterseite des Deckelelementes verbunden ist, so dass das Zwischenelement das Aufnahmevolumen bis zur Unterseite des Deckelelementes fortsetzt.

Folglich ist die Gepäckaufnahmevorrichtung beispielsweise dann bereit zur Aufnahme der Gepäckstücke, wenn sich das Deckelelement in dem geöffneten Zustand befindet. Hierzu wird das Deckelelement aus einem geschlossenen Zustand in den geöffneten Zustand durch eine Klappbewegung relativ zu der Fahrzeugstruktur gebracht.

Der Gepäckbehälter selbst ist flexibel ausgestaltet. Dies kann zum Beispiel bedeuten, dass der Gepäckbehälter zumindest abschnittsweise oder vollständig faltbar oder zusammenklappbar ausgebildet ist. Auf diese Weise kann dieser in einem nicht genutzten Zustand in seinem Volumen deutlich verkleinert werden und ist somit leicht am oder im Kraftfahrzeug verstaubar. Im Bedarfsfall lässt sich dieser entsprechend leicht entfalten oder aufklappen. Die Flexibilität des Gepäckbehälters kann vorzugsweise durch eine flexible Wandung des Gepäckbehälters bereitgestellt werden. Zum Beispiel kann diese ganz oder abschnittsweise aus textilem Material, Leder oder Kunststoff gefertigt sein.

Im geöffneten Zustand des Deckelelements ist der Gepäckbehälter sowohl mit dem Deckelelement als auch mit der Fahrzeugstruktur verbunden und bildet gleichzeitig das Aufnahmevolumen, in welchem die Gepäckstücke zum Transport angeordnet werden können. Dies bedeutet, dass der Gepäckbehälter in einem aufgefalteten oder aufgeklappten Zustand vorliegt, um in seinem Inneren das Aufnahmevolumen zu definieren. Durch die flexible Ausgestaltung kann der Gepäckbehälter anschließend mit deutlich reduziertem Volumen platzsparend verstaut werden und bleibt dennoch jederzeit für einen spontanen Bedarf verfügbar.

Als motorradähnliche Fahrzeuge (auch als motorradähnliche Kraftfahrzeuge bezeichnet) sind im Rahmen dieser Beschreibung insbesondere alle Einspurfahrzeuge aber auch Mehrspurfahrzeuge jeweils mit entsprechend schmaler Spurbreite, besonders bevorzugt alle Neigefahrzeuge einschließlich zweirädrige, dreirädrige oder vierrädrige Motorroller beziehungsweise Scooter, aber auch nicht-neigungsfähige Quads zu verstehen.

Wie voranstehend beschrieben ist der Gepäckbehälter lösbar mit einer Unterseite des Deckelelements mittels einer ersten Verbindungsvorrichtung verbunden oder verbindbar ausgebildet. Dies bedeutet, dass mit Hilfe der ersten Verbindungsvorrichtung der Gepäckbehälter fest an der Unterseite des Deckelelements befestigt werden kann. Dies kann entweder der Fall sein durch ein Verbinden, sobald das Deckelelement sich in der geöffneten Position befindet. Auf diese Weise wird der separate Gepäckbehälter an dem Deckelelement zumindest für den Transport befestigt.

Vorzugsweise kann der Gepäckbehälter aber auch bereits an der Unterseite (lösbar) befestigt sein, wenn sich das Deckelelement noch in der geschlossenen Position befindet. In diesem Fall ist der Gepäckbehälter zwischen der Unterseite des Deckelelementes und der darunter angeordneten Fahrzeugstruktur platziert. In diesem geschlossenen Zustand des Deckelelements kann der Gepäckbehälter aufgrund seiner flexiblen Ausgestaltung zusammengefaltet oder zusammengeklappt angeordnet sein. Der Gepäckbehälter wird dann (aufgrund seiner Verbindung mit der Unterseite des Deckelelements) zusammen mit dem Deckelelement aufgeklappt. Beispielsweise kann sich hierbei der Gepäckbehälter aufgrund seiner flexiblen Ausgestaltung aus dem zuvor zusammengefalteten oder zusammengeklappten Zustand entfalten beziehungsweise auseinanderklappen, um das beschriebene Aufnahmevolumen zu bilden. Somit ist der Gepäckbehälter in dem geschlossenen Zustand des Deckelelementes (versteckt) verstaut und wird erst im Bedarfsfall entfaltet.

Umgekehrt kann der Gepäckbehälter durch Zuklappen des Deckelelements in den geschlossenen Zustand ebenfalls zusammengefaltet beziehungsweise zusammengeklappt werden.

Erfindungsgemäß ist die erste Verbindungsvorrichtung lösbar ausgebildet, so dass das Befestigen des separaten Gepäckbehälters oder ein Entfernen des Gepäckbehälters ermöglicht wird. So kann der Gepäckbehälter zum Be- oder Entladen von dem Fahrzeug entfernt werden. Die in dem Gepäckbehälter aufgenommenen Gegenstände lassen sich so bequem in dem Gepäckbehälter von dem Fahrzeug weg- oder zu diesem hin transportieren.

Die Verbindung des Gepäckbehälters mit der Fahrzeugstruktur kann zum Beispiel derart ausgestaltet sein, dass ein Bodenabschnitt des Gepäckbehälters auf einem Stützbereich der Fahrzeugstruktur abgestützt wird. Alternativ oder zusätzlich kann der Bodenabschnitt mit dem Stützbereich mittels einer zweiten Verbindungsvorrichtung lösbar verbunden oder verbindbar ausgebildet sein.

Das Abstützen erfolgt durch einfaches und loses Aufstellen des Bodenabschnitts auf dem Stützbereich, so dass eine Kontaktverbindung geschaffen ist. Dagegen kann eine feste Verbindung mithilfe des zweiten Verbindungsabschnitts erfolgen. Dieser ist beispielsweise derart ausgestaltet, dass eine haltbare Fixierung des Gepäckbehälters an dem Stützbereich bereitgestellt wird. Diese kann jedoch ebenfalls lösbar ausgestaltet sein, um im Bedarfsfall eine Entnahme des Gepäckbehälters zu ermöglichen.

Der Stützbereich kann insbesondere eben oder wannenförmig ausgebildet sein, um einen zusätzlichen Seitenhalt zu gewähren. Der wannenförmige Stützbereich kann zum Beispiel durch ein Staufach (hierzu kann auch ein Helmfach zählen) gebildet werden, welches unterhalb des (zugeklappten) Deckelelements angeordnet ist. Mit Hilfe des Gepäckbehälters, welcher auf beziehungsweise in dem wannenförmigen Stützbereich angeordnet ist, kann eine Staufachvergrößerung über einen oberen Rand des Staufaches hinaus erfolgen, indem der Gepäckbehälter im geöffneten Zustand des Deckelelements über den oberen Rand hervorsteht.

Der beschriebene Stützbereich kann zum Beispiel durch einen Heckrahmen des Fahrzeugs, eine mit dem Heckrahmen verbundene Stützfläche und/oder durch eine Innenwand, insbesondere einen Boden, eines Staufaches des Fahrzeugs gebildet sein.

Die erste und/oder die zweite Verbindungsvorrichtung können jeweils zum Bereitstellen einer lösbaren formschlüssigen und/oder lösbaren kraftschlüssigen Verbindung mit dem Gepäckbehälter ausgebildet sein. Zum Beispiel kann jede dieser Verbindungsvorrichtungen unabhängig von der jeweils anderen Vorrichtung einen Reißverschluss, Klettverschluss, eine Verraststruktur und/oder eine Clipstruktur aufweisen. Diese Verschlüsse eignen sich in besonderer Weise für eine leicht zu lösende aber dennoch haltbare Verbindung, um den Gepäckbehälter während der Fahrt sicher an seinem Platz zu halten.

Wie bereits beschrieben, umfasst die erste Verbindungsvorrichtung ein Zwischenelement, welches einerseits mit dem Deckelelement und andererseits mit dem Gepäckbehälter verbunden oder verbindbar ist. Dieses Zwischenelement ist einerseits mit der Unterseite des Deckelelementes verbunden und andererseits zum (lösbaren) Verbinden mit dem Gepäckbehälter ausgestaltet.

Gemäß einer Ausführungsform ist das Zwischenelement ebenfalls flexibel, vorzugsweise aus dem gleichen flexiblen Material gefertigt, wie der Gepäckbehälter. Das Zwischenelement kann derart ausgestaltet sein, dass es das Aufnahmevolumen des Gepäckbehälters im verbundenen Zustand verschließt und gleichzeitig die Verbindung zwischen Gepäckbehälter und Deckelelement herstellt.

Wie bereits beschrieben ist das Zwischenelement erfindungsgemäß schlauchförmig ausgebildet und an einem ersten Ende umlaufend mit einem oberen freien Rand des Gepäckbehälters verbunden. Ein zu dem ersten Ende entgegengesetzt angeordnetes zweites Ende ist mit seinem Rand umlaufend mit der Unterseite des Deckelelementes verbunden, so dass das Zwischenelement das Aufnahmevolumen bis zur Unterseite des Deckelelementes fortsetzt.

Die beschriebene Klappbarkeit des Deckelelements kann zum Beispiel dadurch bereitgestellt werden, dass das Deckelelement klappbar mittels einer Drehgelenkvorrichtung und/oder einer Schwenkgelenkvorrichtung mittelbar oder unmittelbar mit der Fahrzeugstruktur verbunden ist. Insbesondere kann hierzu eine Doppelhebelkinematik mit Totpunkt und einer optionalen Federvorspannung zum Einsatz kommen, um das Deckelelement in einem geöffneten Zustand zu arretieren.

Beispielsweise kann das Deckelelement im geöffneten Zustand im Wesentlichen senkrecht (also nahezu senkrecht) am Fahrzeug ausgerichtet sein. Dies bietet einerseits eine verbesserte fahrzeugfeste Befestigungsmöglichkeit für den Gepäckbehälter. Zudem kann auf diese Weise gegebenenfalls eine Rückenlehne für einen Fahrer bereitgestellt werden. Aufgrund des Totpunkts kann eine (leichte) Kraft abgestützt werden, so dass sich der Fahrer zumindest leicht anlehnen kann.

Zum Beispiel kann das Deckelelement eine Oberseite aufweisen, die als Gepäckträger, Karosserieverkleidungsteil oder als Sitzfläche ausgebildet ist. Die Sitzfläche kann vorzugsweise die Sitzfläche für einen Mitfahrer, den sogenannten Sozius, darstellen und somit unmittelbar angrenzend oder zumindest benachbart zu einem Sitz des Fahrers angeordnet sein.

Ferner wird ein Motorrad oder ein motorradähnliches Kraftfahrzeug, mit einer Gepäckaufnahmevorrichtung bereitgestellt, wobei die Gepäckaufnahmevorrichtung gemäß der Beschreibung ausgeführt ist.

Mit der beschriebenen Gepäckaufnahmevorrichtung kann also ein flexibles Verstausystem bereitgestellt werden. Dieses kann sich beispielsweise im Bedarfsfall aus dem hinteren Sitzplatz (Soziusplatz) entfalten. Im zusammengefalteten Zustand ist es dagegen verstaut und ist spontan jederzeit verfügbar und einsetzbar. Zudem ist der Gepäckbehälter leicht abnehmbar und ebenso leicht wieder an dem Fahrzeug zu befestigen. Es kann auf diese Weise zusätzlicher Stauraum geschaffen oder das Volumen bestehender Staufächer im Bedarfsfall deutlich vergrößert werden.

Die Erfindung wird nachfolgend anhand mehrerer Ausführungsbeispiele unter Bezugnahme auf die Figuren näher beschreiben. Es zeigen:
- Fig. 1: eine perspektivische Heckansicht eines Fahrzeugs mit einer nicht erfindungsgemäßen (ersten) Ausführungsform einer Gepäckaufnahmevorrichtung gemäß der Beschreibung im geöffneten Zustand,
- Fig. 2: das Fahrzeug gemäß Fig. 1 mit entnommenem Gepäckbehälter,
- Fig. 3: das Fahrzeug gemäß Fig. 1 mit der Gepäckaufnahmevorrichtung im geschlossenen Zustand.
- Fig. 4: die Gepäckaufnahmevorrichtung aus Fig. 1 in einer Detailansicht,
- Fig. 5: eine Unterseite der Gepäckaufnahmevorrichtung aus Fig. 4,
- Fig. 6: eine seitliche Schnittansicht der Gepäckaufnahmevorrichtung aus Fig. 4,
- Fig. 7: zwei Detailansichten zu der Schnittansicht aus Fig. 6,
- Fig. 8: eine perspektivische Heckansicht eines Fahrzeugs mit einer erfindungsgemäßen, zweiten Ausführungsform einer Gepäckaufnahmevorrichtung gemäß der Beschreibung im geöffneten Zustand,
- Fig. 9: Teile der Gepäckaufnahmevorrichtung aus Fig. 8
- Fig. 10: den Gepäckbehälter aus Fig. 8 und 9,
- Fig. 11: das Fahrzeug gemäß Fig. 8 ohne Gepäckbehälter,
- Fig. 12: das Fahrzeug gemäß Fig. 11 ohne Zwischenelement,
- Fig. 13: das Fahrzeug gemäß Fig. 8 mit der Gepäckaufnahmevorrichtung im geschlossenen Zustand,
- Fig. 14: ein Deckelelement der Gepäckaufnahmevorrichtung aus Fig. 8 im geöffneten Zustand.

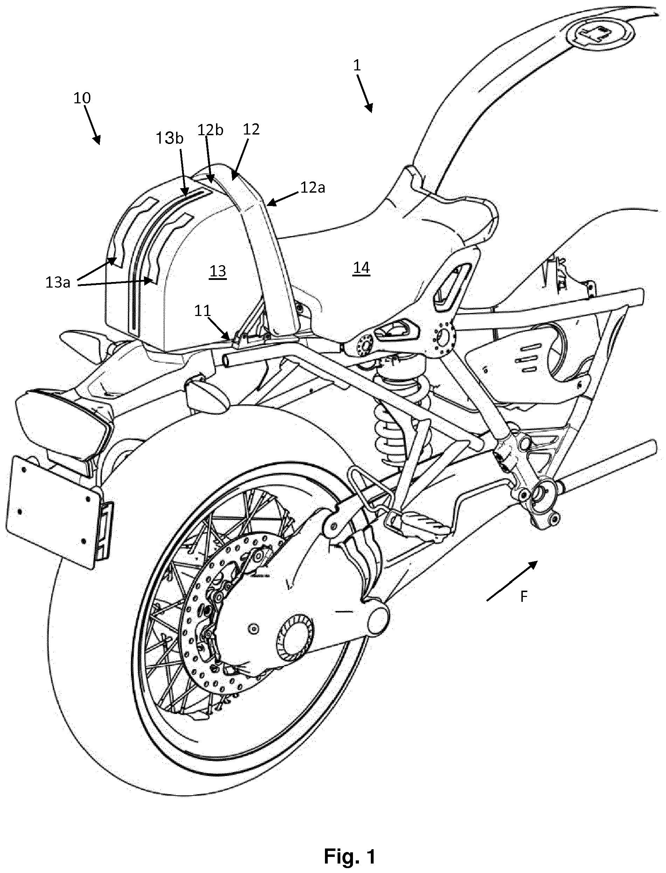

In Fig. 1 ist eine nicht erfindungsgemäßen Ausführung eines Kraftfahrzeugs 1 dargestellt. Fig. 1 zeigt in perspektivischer Darstellung einen Heckbereich des Kraftfahrzeugs 1, welches beispielhaft als Motorrad ausgebildet ist. Ebenso kann das Kraftfahrzeug 1 aber auch ein motorradähnliches Fahrzeug sein. Das Kraftfahrzeug 1 umfasst eine nicht erfindungsgemäße erste Ausführungsform einer Gepäckaufnahmevorrichtung 10, wobei diese in Fig. 1 in einem geöffneten, also in einem aufgeklappten Zustand abgebildet ist.

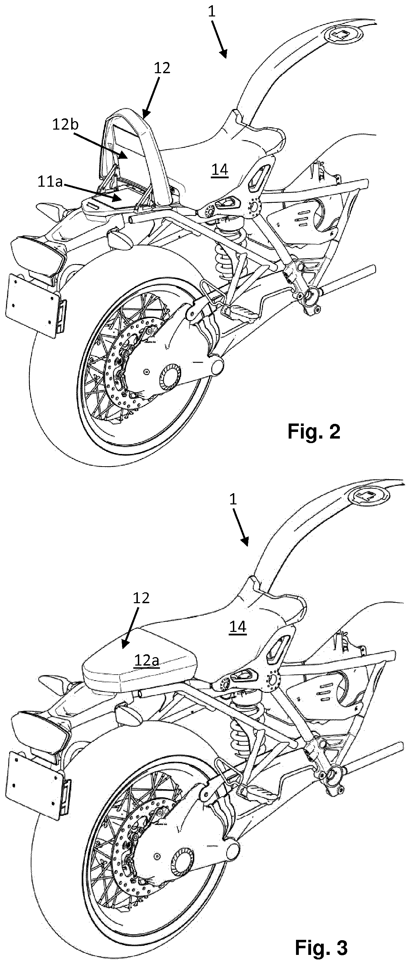

Die Gepäckaufnahmevorrichtung 10 umfasst zumindest
- eine fahrzeugfeste Fahrzeugstruktur 11,
- ein klappbar mit der Fahrzeugstruktur 11 verbundenes Deckelelement 12, welches zumindest zwischen dem in Fig. 1 dargestellten geöffneten Zustand und einem geschlossenen Zustand (siehe Fig. 3) klappbar ausgebildet ist, und
- einem flexiblen Gepäckbehälter 13.

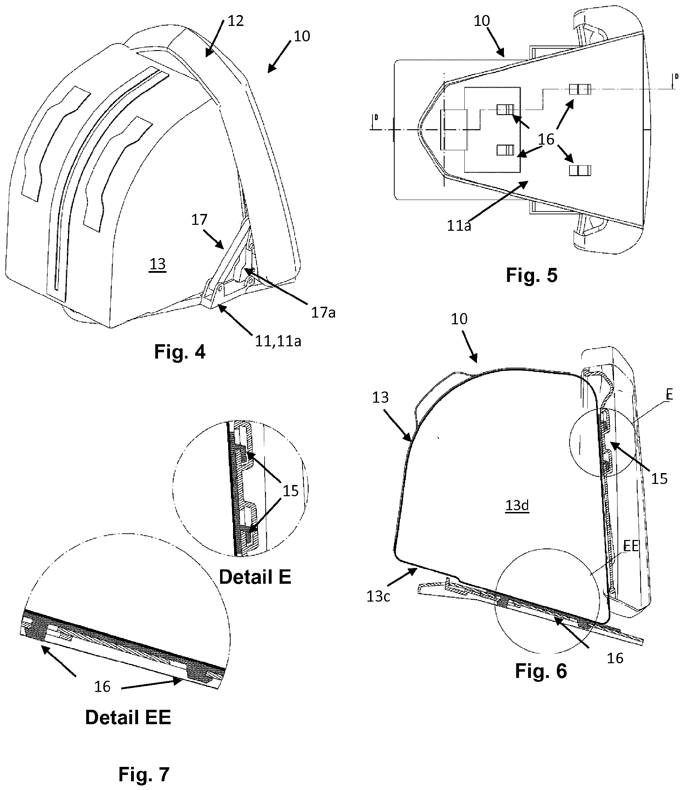

Der flexible Gepäckbehälter 13 ist zumindest in dem geöffneten Zustand des Deckelelements 12 derart mit dem Deckelelement 12 und der Fahrzeugstruktur 11 verbunden, dass im Inneren des Gepäckbehälters 13 ein Aufnahmevolumen 13d (siehe Fig. 6) zur Aufnahme von Gepäckstücken (nicht dargestellt) in dem Gepäckbehälter 13 bereitgestellt ist. Der Gepäckgehälter 13 weist lediglich beispielhaft zwei Handgriffe 13a sowie einen wiederverschließbaren Verschluss 13b in Form eines Reißverschlusses auf, um einen wiederverschließbaren Zugang zu dem Aufnahmevolumen 13d bereitzustellen.

Die Gepäckaufnahmevorrichtung 10 ist in Fahrtrichtung F hinter einem Fahrersitz 14 angeordnet. Das Deckelelement 12 definiert einen Sitz für einen Beifahrer, indem auf einer Oberseite 12a eine Sitzfläche vorgesehen ist, die im geschlossenen, also im zugeklappten Zustand (dargestellt in Fig. 3) der Gepäckaufnahmevorrichtung 10 für den Beifahrer nutzbar ist. Alternativ und daher nicht dargestellt, kann das Deckelelement 12 eine Oberseite aufweisen, die als Gepäckträger oder Karosserieverkleidungsteil ausgebildet ist.

Die Gepäckaufnahmevorrichtung 10 ist derart ausgebildet, dass der Gepäckbehälter 13 lösbar mit einer Unterseite 12b des Deckelelements 12 mittels einer ersten Verbindungsvorrichtung 15 (siehe Fig. 6 und 7) verbunden ist. Die erste Verbindungsvorrichtung 15 ist zum Bereitstellen einer lösbaren formschlüssigen Verbindung mit dem Gepäckbehälter 13 vorgesehen, und weist hierzu eine Verraststruktur auf. Diese ist in Fig. 6 - 7 beispielhaft dargestellt.

Die erste Verbindungsvorrichtung 15 kann alternativ oder zusätzlich als lösbare kraftschlüssige Verbindung ausgeführt sein.

In jeder dieser Varianten kann der Gepäckbehälter 13 wahlweise im Bedarfsfall entnommen und von dem Kraftfahrzeug 1 entfernt werden. Fig. 2 zeigt das Kraftfahrzeug 1 nach dem Entfernen des Gepäckbehälters 13.

Die Entnahme des Gepäckbehälters 13 bietet sich beispielsweise zum Beladen oder Entladen des Gepäckbehälters 13 an. Ein Bodenabschnitt 13c des Gepäckbehälters 13 ist derart ausgebildet, dass dieser auf einem Stützbereich 11a der Fahrzeugstruktur 11 abgestützt ist. Der Stützbereich 11a ist in Fig. 2 erkennbar und beispielhaft als eine mit dem Heckrahmen verbundene Stützfläche ausgebildet.

Das Abstützen kann gemäß der Darstellung durch eine feste Verbindung mithilfe einer zweiten Verbindungsvorrichtung 16 erfolgen, die insbesondere aus den Fig. 5, 6 und 7 ersichtlich ist. Diese ist beispielsweise derart ausgestaltet, dass eine haltbare und lösbare Fixierung des Gepäckbehälters 13 an dem Stützbereich 11a bereitgestellt wird, um im Bedarfsfall eine Entnahme des Gepäckbehälters 13 zu ermöglichen. Hierzu ist die zweite Verbindungsvorrichtung 16 zum Bereitstellen einer lösbaren formschlüssigen und/oder lösbaren kraftschlüssigen Verbindung mit dem Gepäckbehälter 13 ausgebildet. So können dem Gepäckbehälter 13 zugeordnete Fortsätze in entsprechende Ausnehmungen des Stützbereichs 11a eingreifen und verrasten. Eine umgekehrte Anordnung ist ebenso möglich, so dass die Fortsätze dem Stützbereich 11a und die Ausnehmungen dem Gepäckbehälters 13 zugeordnet sind (nicht dargestellt).

Alternativ kann auf die zweite Verbindungsvorrichtung 16 verzichtet werden, so dass das Abstützen durch einfaches und loses Aufstellen des Bodenabschnitts auf dem Stützbereich erfolgen kann, um die Kontaktverbindung zu schaffen (ebenfalls nicht dargestellt).

Zur Bereitstellung der Klappbarkeit des Deckelelements 12 ist die Gepäckaufnahmevorrichtung 10 derart ausgebildet, dass das Deckelelement 12 klappbar mittels einer Schwenkgelenkvorrichtung 17 verbunden ist. Diese ist gemäß der dargestellten Ausführungsform vorzugsweise als Doppelhebelkinematik, insbesondere mit Totpunkt, ausgeführt sein, um das Deckelelement in der geöffneten Stellung zu halten. Über die beiden Hebel 17a der Doppelhebelkinematik 17 wird ein Viergelenk bereitgestellt, über welches das Deckelelement 12 mit der Fahrzeugstruktur 11 beziehungsweise dem Stützbereich 11a verbunden ist, wie beispielsweise aus Fig. 4 erkennbar ist.

Die dargestellte Ausführungsform ermöglicht, dass der Gepäckbehälter 13 an der Unterseite 12b des Deckelelements 12 (lösbar) befestigt ist. In dem geschlossenen Zustand der Gepäckaufnahmevorrichtung 10 und damit auch des Deckelelements 12 ist der Gepäckbehälter 13 zwischen der Unterseite 12b des Deckelelementes 12 und der darunter angeordneten Fahrzeugstruktur 11 platziert. In diesem geschlossenen Zustand des Deckelelements 12 kann der Gepäckbehälter 13 aufgrund seiner flexiblen Ausgestaltung zusammengefaltet oder zusammengeklappt sein. Der Gepäckbehälter 13 wird dann zusammen mit dem Deckelelement 12 aufgeklappt. Hierbei wird der Gepäckbehälter 13 aus dem zuvor zusammengefalteten oder zusammengeklappten Zustand entfaltet beziehungsweise auseinanderklappt, um das beschriebene Aufnahmevolumen 13d zu bilden. Somit ist der Gepäckbehälter 13 in dem in Fig. 3 dargestellten geschlossenen Zustand des Deckelelementes 12 (versteckt) am Kraftfahrzeug 1 verstaut und wird erst im Bedarfsfall entfaltet und sichtbar.

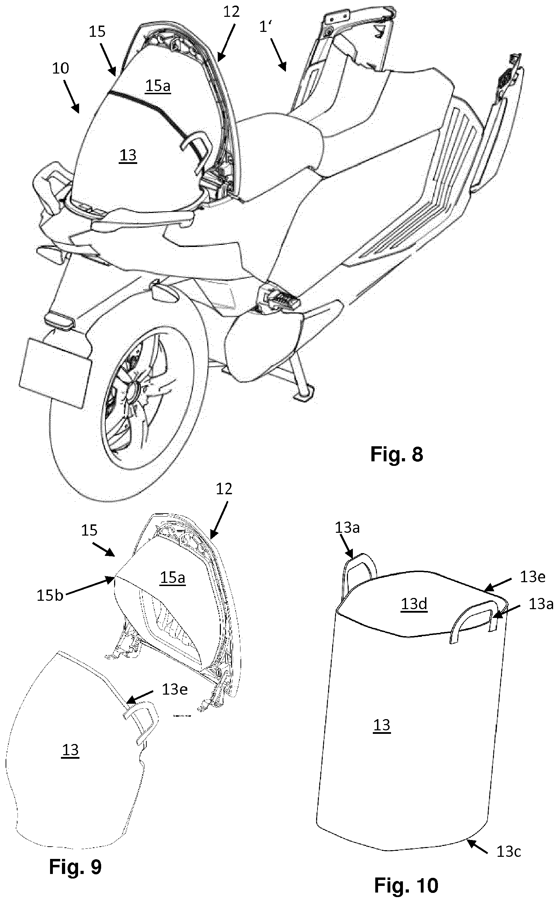

Fig. 8 zeigt eine perspektivische Heckansicht eines Fahrzeugs 1' mit einer erfindungsgemäßen zweiten Ausführungsform einer Gepäckaufnahmevorrichtung 10 im geöffneten, also aufgeklappten Zustand. Diese erfindungsgemäße zweite Ausführungsform stimmt im Wesentlichen mit der nicht erfindungsgemäße ersten Ausführungsform überein, so dass zur Erläuterung auf die dortige Beschreibung verwiesen wird und im Folgenden lediglich die Unterschiede beider Ausführungsformen beschrieben werden. Alle sonstigen Merkmale und Komponenten, sofern vergleichbar oder gleichwirkend, weisen die gleichen Bezugszeichen auf und können entsprechend übernommen werden.

Ein erster Unterschied besteht in der Ausführung des Kraftfahrzeugs 1' als solchem. Dieses ist im Unterschied zu dem in den Fig. 1 bis 3 dargestellten Motorrad 1 als Motorroller 1' dargestellt. Selbstverständlich kann das Kraftfahrzeug 1' aber ebenso auch als Motorrad oder als ein anderes motorradähnliches Fahrzeug ausgebildet sein.

Gemäß der dargestellten zweiten Ausführungsform ist der Stützbereich 11a wannenförmig ausgebildet und wird durch ein Staufach, zum Beispiel ein Helmfach, gebildet. Dieses ist unterhalb des (geschlossenen) Deckelelements 12 angeordnet. Ein Aufstützen des Bodenabschnitts 13c des Gepäckbehälters 13 erfolgt durch einfaches und loses Aufstellen des Bodenabschnitts 13c des Gepäckbehälters 13 auf dem Stützbereich 11a. Mit Hilfe des Gepäckbehälters 13, welcher in dem wannenförmigen Stützbereich 11a angeordnet ist, kann eine Staufachvergrößerung über einen oberen Rand 11e des Staufaches hinaus erfolgen, indem der Gepäckbehälter 13 im geöffneten Zustand des Deckelelements 11 über den oberen Rand 11e übersteht.

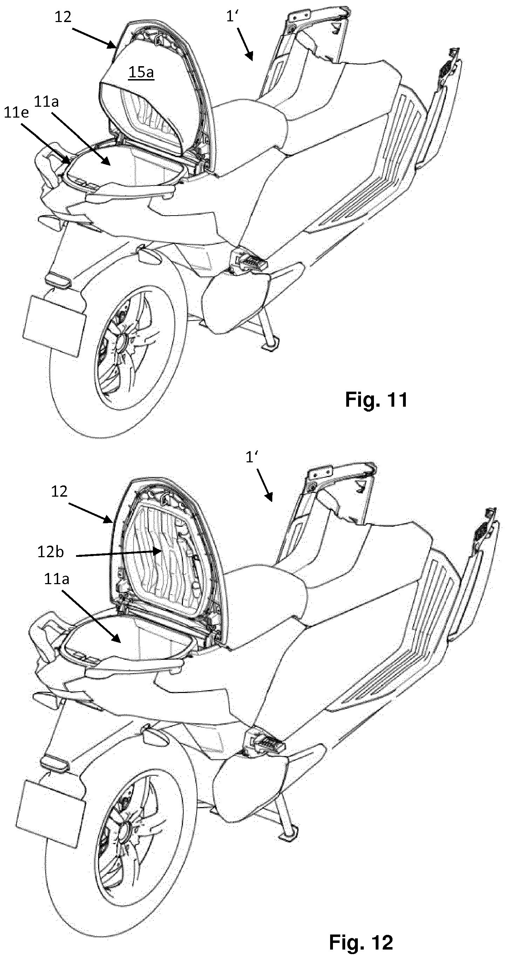

Des Weiteren umfasst die erste Verbindungsvorrichtung 15 ein (zusätzliches) abnehmbares Zwischenelement 15a, welches einerseits mit dem Deckelelement 12 und andererseits mit dem Gepäckbehälter 13 verbunden ist. Dieses Zwischenelement 15a ist hierzu schlauchförmig ausgeführt und an einem Ende mit der Unterseite 12b des Deckelelementes 12 verbunden (siehe Fig. 11 und 12) sowie andererseits zum (lösbaren) Verbinden mit dem Gepäckbehälter 13 ausgestaltet. Dies kann beispielsweise mittels eines Reißverschlusses 15b oder anderer Verbindungselemente erfolgen.

Zum Beispiel kann das Zwischenelement 15a ebenfalls flexibel (vorzugsweise aus dem gleichen flexiblen Material) gefertigt sein wie der Gepäckbehälter 13. Das Zwischenelement 15a ist derart ausgestaltet, dass es das Aufnahmevolumen 13d des Gepäckbehälters 13 im verbundenen Zustand (siehe Fig. 8) verschließt und gleichzeitig die Verbindung zwischen Gepäckbehälter 13 und Deckelelement 12 herstellt.

In Fig. 9 ist das Deckelelement 12 und der Gepäckbehälter 13 nochmals separat dargestellt, wie sie in Fig. 8 verbaut sind. Es ist erkennbar, dass der Gepäckbehälter 13 aufgrund seiner Flexibilität entsprechend verformbar ist. Fig. 10 zeigt beispielhaft den Gepäckbehälter 13 in einem freien, nicht verbundenen Gebrauchszustand, in dem dieser an den Griffen 13a getragen werden kann. Aus dieser Darstellung wird die eigentliche Form des Gepäckbehälters 13 ersichtlich, die beutel- beziehungsweise taschenförmig ausgebildet ist. Die Verbindung mit der ersten Verbindungsvorrichtung 15 beziehungsweise dessen Zwischenelement 15a erfolgt an dem oberen Rand 13e des Gepäckbehälters 13, zum Beispiel mittels des um den Rand umlaufenden Reißverschlusses 15b oder anderer Verschlusselemente.

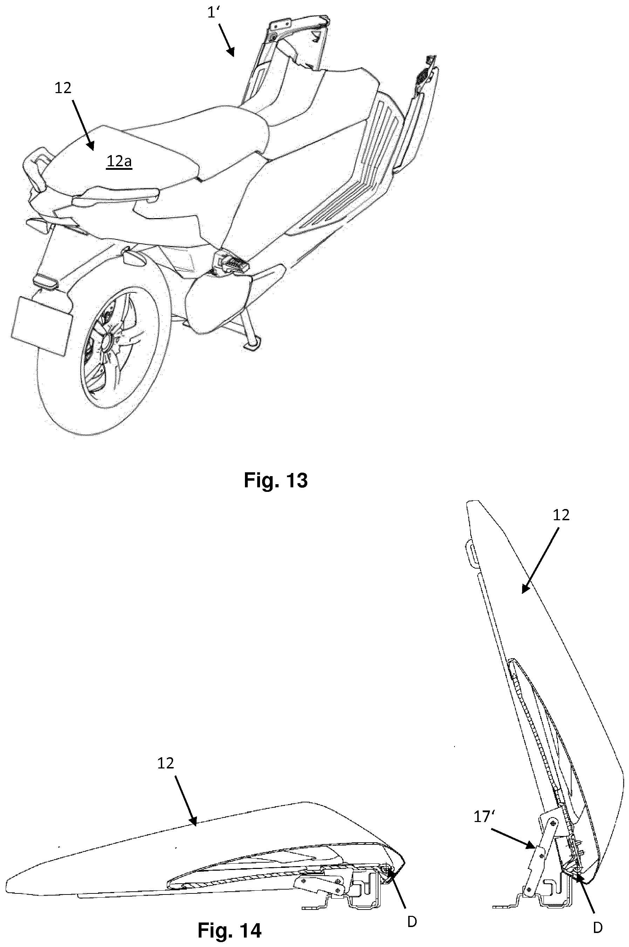

In Fig. 14 ist das Deckelelement 12 der Gepäckaufnahmevorrichtung 10 aus Fig. 8 in geöffnetem, also aufgeklapptem Zustand in teilweise geschnittener Ansicht dargestellt. Hierbei ist die für die beschriebene Klappbarkeit des Deckelelements 12 vorgesehene Drehgelenkvorrichtung 17' erkennbar. Diese verbindet das Deckelelement 12 mit der Fahrzeugstruktur (siehe Fig. 8 - 13) und ermöglicht dessen Drehung um eine definierte Drehachse D. Optional kann die Drehgelenkvorrichtung 17'eine Arretierung zur Feststellung des Deckelelementes 12 aufweisen.

## Patentansprüche

1. Gepäckaufnahmevorrichtung (10) für ein Motorrad (1') oder ein motorradähnliches Kraftfahrzeug mit zumindest
- einer fahrzeugfesten Fahrzeugstruktur (11),
- einem klappbar mit der Fahrzeugstruktur (11) verbundenen Deckelelement (12), welches zumindest zwischen einem geschlossenen Zustand und einem geöffneten Zustand klappbar ausgebildet ist, und
- einem flexiblen Gepäckbehälter (13), welcher flexibel verformbar sowie taschenförmig ausgebildet ist,
wobei der flexible Gepäckbehälter (13) zumindest in dem geöffneten Zustand des Deckelelements (12) derart mit dem Deckelelement (12) und der Fahrzeugstruktur (11) verbunden ist, dass im Inneren des Gepäckbehälters (13) ein Aufnahmevolumen (13d) zur Aufnahme von Gepäckstücken in dem Gepäckbehälter (13) bereitgestellt ist, wobei der Gepäckbehälter (13) lösbar mit einer Unterseite (12b) des Deckelelements (12) mittels einer ersten Verbindungsvorrichtung (15) verbunden oder verbindbar ist, wobei die erste Verbindungsvorrichtung (15) ein Zwischenelement (15a) umfasst, welches einerseits mit der Unterseite (12b) des Deckelelements (12) verbunden ist und andererseits mit dem Gepäckbehälter (13) lösbar verbunden oder lösbar verbindbar ist, **dadurch gekennzeichnet, dass** der Gepäckbehälter als separater Gepäckbehälter ausgebildet ist, wobei die lösbar ausgebildete erste Verbindungsvorrichtung ein Befestigen des separaten Gepäckbehälters oder ein Entfernen des Gepäckbehälters ermöglicht, so dass der Gepäckbehälter zum Be- oder Entladen von dem Motorrad (1') oder dem motorradähnlichen Kraftfahrzeug entfernt werden kann,
wobei das Zwischenelement (15a) schlauchförmig ausgebildet ist und an einem ersten Ende umlaufend mit einem oberen freien Rand (13e) des Gepäckbehälters (13) lösbar verbunden oder lösbar verbindbar ist, wobei ein zu dem ersten Ende entgegengesetzt angeordnetes zweites Ende mit seinem Rand umlaufend mit der Unterseite (12b) des Deckelelementes (12) verbunden ist, so dass das Zwischenelement (15a) das Aufnahmevolumen (13d) bis zur Unterseite (12b) des Deckelelementes (12) fortsetzt.

2. Gepäckaufnahmevorrichtung (10) nach Anspruch 1, **dadurch gekennzeichnet, dass** ein Bodenabschnitt des Gepäckbehälters (13) auf einem Stützbereich (11a) der Fahrzeugstruktur (11) abgestützt oder mit dem Stützbereich (11a) mittels einer zweiten Verbindungsvorrichtung (16) lösbar verbunden oder verbindbar ist.

3. Gepäckaufnahmevorrichtung (10) nach Anspruch 2, **dadurch gekennzeichnet, dass** der Stützbereich (11a) durch einen Heckrahmen, eine mit dem Heckrahmen verbundene Stützfläche und/oder durch eine Innenwand, insbesondere einen Boden, eines Staufaches des Motorrads (1') oder des motorradähnlichen Kraftfahrzeugs gebildet ist.

4. Gepäckaufnahmevorrichtung (10) nach mindestens einem der Ansprüche 2 bis 3, **dadurch gekennzeichnet, dass** die erste und/oder die zweite Verbindungsvorrichtung (15,16) jeweils zum Bereitstellen einer lösbaren formschlüssigen und/oder lösbaren kraftschlüssigen Verbindung mit dem Gepäckbehälter (13) ausgebildet ist, insbesondere jeweils einen Reißverschluss (15b), Klettverschluss, eine Verraststruktur und/oder eine Clipstruktur aufweist.

5. Gepäckaufnahmevorrichtung (10) nach mindestens einem der Ansprüche 1 bis 4, **dadurch gekennzeichnet, dass** das Deckelelement (12) klappbar mittels einer Drehgelenkvorrichtung (17') und/oder einer Schwenkgelenkvorrichtung (17) mittelbar oder unmittelbar mit der Fahrzeugstruktur verbunden ist.

6. Gepäckaufnahmevorrichtung (10) nach mindestens einem der Ansprüche 1 bis 5, **dadurch gekennzeichnet, dass** das Deckelelement (12) eine Oberseite (12a) aufweist, die als Gepäckträger, Karosserieverkleidungsteil oder als Sitzfläche ausgebildet ist.

7. Motorrad (1') oder motorradähnliches Kraftfahrzeug, mit einer Gepäckaufnahmevorrichtung (10), **dadurch gekennzeichnet, dass** die Gepäckaufnahmevorrichtung (10) gemäß einem der Ansprüche 1 bis 6 ausgebildet ist.

## Claims

1. Luggage-receiving device (10) for a motorcycle (1'), or a motorcycle-like motor vehicle, having at least
- a vehicle-mounted vehicle structure (11),
- a lid element (12), which is connected to the vehicle structure (11) for swing action and is designed for swing action at least between a closed state and an open state, and
- a flexible luggage container (13), which is flexibly deformable and of pocket-like design,
wherein, at least in the open state of the lid element (12), the flexible luggage container (13) is connected to the lid element (12) and the vehicle structure (11) such that the interior of the luggage container (13) has a receiving volume (13d) for receiving items of luggage in the luggage container (13), wherein the luggage container (13) is or can be connected to an underside (12b) of the lid element (12) in a releasable manner by means of a first connecting device (15), wherein the first connecting device (15) comprises an intermediate element (15a) which, on the one hand, is connected to the underside (12b) of the lid element (12) and, on the other hand, is or can be connected to the luggage container (13) in a releasable manner, **characterized in that** the luggage container is designed in the form of a separate luggage container, wherein the releasably designed first connecting device allows fastening of the separate luggage container, or removal of the luggage container, so that the luggage container can be removed in order for the motorcycle (1'), or the motorcycle-like motor vehicle, to be loaded or unloaded, wherein the intermediate element (15a) is designed in the form of a flexible tube and, at a first end, is or can be connected all the way round to an upper free edge (13e) of the luggage container (13) in a releasable manner, wherein a second end, which is arranged opposite the first end, has its edge connected all the way round to the underside (12b) of the lid element (12), so that the intermediate element (15a) continues the receiving volume (13d) as far as the underside (12b) of the lid element (12).

2. Luggage-receiving device (10) according to Claim 1, **characterized in that** a base portion of the luggage container (13) is supported on a supporting region (11a) of the vehicle structure (11) or is or can be connected to the supporting region (11a) in a releasable manner by means of a second connecting device (16).

3. Luggage-receiving device (10) according to Claim 2, **characterized in that** the supporting region (11a) is formed by a rear frame, a supporting surface connected to the rear frame and/or by an inner wall, in particular a base, of a stowage compartment of the motorcycle (1'), or of the motorcycle-like motor vehicle.

4. Luggage-receiving device (10) according to at least one of Claims 2 and 3, **characterized in that** the first and/or the second connecting device (15, 16) is/are designed in each case to establish a releasable form-fitting and/or releasable force-fitting connection to the luggage container (13), in particular it has/they have a respective zip fastener (15b), hook-and-loop fastener, a latching structure and/or a clip structure.

5. Luggage-receiving device (10) according to at least one of Claims 1 to 4, **characterized in that** the lid element (12) is connected directly or indirectly to the vehicle structure for swing action by means of a rotary-joint device (17') and/or a swivel-joint device (17).

6. Luggage-receiving device (10) according to at least one of Claims 1 to 5, **characterized in that** the lid element (12) has an upper side (12a), which is designed in the form of a luggage carrier, body-panelling part or in the form of a seat surface.

7. Motorcycle (1'), or motorcycle-like motor vehicle, having a luggage-receiving device (10), **characterized in that** the luggage-receiving device (10) is designed according to one of Claims 1 to 6.

## Revendications

1. Dispositif de réception de bagages (10) pour une motocyclette (1') ou un véhicule automobile semblable à une motocyclette, avec au moins
- une structure de véhicule (11) solidaire du véhicule,
- un élément de couverture (12) relié de manière rabattable à la structure de véhicule (11), qui est réalisé de manière rabattable au moins entre un état fermé et un état ouvert, et
- un contenant de bagages flexible (13), qui est réalisé sous forme déformable de manière flexible et en forme de poche,
le contenant de bagages flexible (13) étant relié, au moins à l'état ouvert de l'élément de couverture (12), à l'élément de couverture (12) et à la structure de véhicule (11) de telle sorte qu'un volume de réception (13d) est fourni à l'intérieur du contenant de bagages (13) pour recevoir des bagages dans le contenant de bagages (13), le contenant de bagages (13) étant relié ou pouvant être relié de manière détachable à un côté inférieur (12b) de l'élément de couverture (12) au moyen d'un premier dispositif de liaison (15), le premier dispositif de liaison (15) comprenant un élément intermédiaire (15a) qui, d'une part, est relié au côté inférieur (12b) de l'élément de couverture (12) et, d'autre part, est relié de manière détachable ou peut être relié de manière détachable au contenant de bagages (13), **caractérisé en ce que** le contenant de bagages est réalisé sous forme de contenant de bagages séparé, le premier dispositif de liaison réalisé sous forme détachable permettant de fixer le contenant de bagages séparé ou de retirer le contenant de bagage, de telle sorte que le contenant de bagages peut être retiré de la motocyclette (1') ou du véhicule automobile semblable à une motocyclette pour le chargement ou le déchargement, l'élément intermédiaire (15a) étant réalisé sous forme de tuyau et étant relié de manière détachable ou pouvant être relié de manière détachable à une première extrémité de manière périphérique à un bord supérieur libre (13e) du contenant de bagages (13), une deuxième extrémité agencée à l'opposé de la première extrémité étant reliée par son bord de manière périphérique au côté inférieur (12b) de l'élément de couverture (12), de telle sorte que l'élément intermédiaire (15a) prolonge le volume de réception (13d) jusqu'au côté inférieur (12b) de l'élément de couverture (12).

2. Dispositif de réception de bagages (10) selon la revendication 1, **caractérisé en ce qu'**une section de fond du contenant de bagages (13) est supportée sur une zone de support (11a) de la structure de véhicule (11) ou est reliée ou peut être reliée de manière détachable à la zone de support (11a) au moyen d'un deuxième dispositif de liaison (16).

3. Dispositif de réception de bagages (10) selon la revendication 2, **caractérisé en ce que** la zone de support (11a) est formée par un cadre arrière, une surface de support reliée au cadre arrière et/ou par une paroi intérieure, notamment un fond, d'un compartiment de rangement de la motocyclette (1') ou du véhicule automobile semblable à une motocyclette.

4. Dispositif de réception de bagages (10) selon au moins l'une quelconque des revendications 2 à 3, **caractérisé en ce que** le premier et/ou le deuxième dispositif de liaison (15, 16) est réalisé respectivement pour fournir une liaison par complémentarité de forme détachable et/ou une liaison par adhérence détachable avec le contenant de bagages (13), notamment présente respectivement une fermeture à glissière (15b), une fermeture agrippante, une structure d'encliquetage et/ou une structure de clip.

5. Dispositif de réception de bagages (10) selon au moins l'une quelconque des revendications 1 à 4, **caractérisé en ce que** l'élément de couverture (12) est relié de manière rabattable directement ou indirectement à la structure du véhicule au moyen d'un dispositif d'articulation rotative (17') et/ou d'un dispositif d'articulation pivotante (17).

6. Dispositif de réception de bagages (10) selon au moins l'une quelconque des revendications 1 à 5, **caractérisé en ce que** l'élément de couverture (12) présente un côté supérieur (12a) qui est réalisé sous forme de porte-bagages, de partie d'habillage de carrosserie ou sous forme de surface de siège.

7. Motocyclette (1') ou véhicule automobile semblable à une motocyclette, avec un dispositif de réception de bagages (10), **caractérisé en ce que** le dispositif de réception de bagages (10) est réalisé selon l'une quelconque des revendications 1 à 6.
